Europäisches Patentamt

European Patent Office

Office européen des brevets

(11) Numéro de publication: **0 399 859**
**A1**

## (12) DEMANDE DE BREVET EUROPEEN

(21) Numéro de dépôt: **90401088.1**

(22) Date de dépôt: **23.04.90**

(51) Int. Cl.⁵: **B30B 11/24, B29C 47/92, G01N 11/00**

(30) Priorité: **22.05.89 FR 8906652**

(43) Date de publication de la demande:
**28.11.90 Bulletin 90/48**

(84) Etats contractants désignés:
**BE CH DE ES GB IT LI NL SE**

(71) Demandeur: **CLEXTRAL**
**Tour Fiat 1 place de la Coupole**
**F-92400 Courbevoie(FR)**

(72) Inventeur: **Grisard, Patrice**
**25 allée le Prince Ringuet**
**F-42100 Saint Etienne(FR)**

(74) Mandataire: **Lanceplaine, Jean-Claude et al**
**CABINET LAVOIX 2, Place d'Estienne**
**d'Orves**
**F-75441 Paris Cédex 09(FR)**

(54) **Perfectionnement à un appareil de mesure de la contrainte de cisaillement d'une matière traitée dans une extrudeuse.**

(57) L'invention a pour objet un perfectionnement à un appareil de mesure de la contrainte de cisaillement d'une matière traitée dans une extrudeuse comprenant au moins une vis (1) entrainée en rotation à l'intérieur d'un fourreau allongé (2), ledit appareil de mesure comprenant d'une part une enclume mobile (12, 12a) disposée dans une chambre de mesure (11) ménagée dans le fourreau (2) et d'autre part un capteur de mesure (13) du déplacement de ladite enclume (12, 12a).

La chambre (11) est rendue étanche par rapport à l'espace formé à l'intérieur du fourreau (2) par un organe d'étanchéité (20) dont au moins une zone (20b) est solidaire de l'enclume (12, 12a) et possédant un faible module d'élasticité dans le sens de rotation de la vis (1) et un grand module d'élasticité dans l'axe de ladite vis.

FIG.1

L'invention a pour objet un perfectionnement à un appareil de mesure de la contrainte de cisaillement d'une matière traitée dans une extrudeuse.

Les extrudeuses sont généralement constituées d'une ou plusieurs vis entrainées en rotation à l'intérieur d'un fourreau allongé dans lequel sont ménagés des alésages pour le logement des vis.

Les vis sont munies, sur leur périphérie de filets en hélice qui entrainent vers l'aval la matière introduite par une extrémité amont du fourreau. En jouant sur le pas des vis, on peut soumettre la matière à différents traitements, par exemple de' trituration, de malaxage ou de compression. La matière est ainsi entrainée jusqu'à l'extrémité aval du fourreau qui peut être munie d'une filière d'extrusion ou bien d'un simple orifice de sortie dans le cas où la matière ne doit pas être soumise à une extrusion.

Dans ce type de machine, il est utile de pouvoir mesurer, la contrainte tangentielle impartie par la matière à la paroi interne du fourreau pour calculer la viscosité, et donc estimer ou calculer la masse moléculaire du fluide visqueux traité, ou son degré de traitement ou de mélange.

Pour cela, on connait des appareils de mesure constitués par des rhéomètres ou des vicosimètres capillaires ou rotationnels qui mesurent les paramètres sur une boucle de recirculation ou sur un débit de fluide dérivé du fourreau de l'extrudeuse.

Ces appareils de mesure présentent des inconvénients.

Tout d'abord, ils sont d'une complexité et d'un coût excessif et ils présentent un temps de réponse important qui limite leur utilité à une régulation à long terme de paramètres à évolution lente, et par conséquent ils ne sont pas adaptés au suivi des réactions chimiques rapides dans extrudeuse.

De plus, ces appareils sont d'une conception inadaptée pour des matières très riches en charge minérale ou fibreuse à cause de la présence de micropompes à engrenages et de tuyaux de faible diamètre.

On connait également dans le US-A-4 464 928, un appareil de mesure comprenant d'une part une enclume mobile disposée dans une chambre et d'autre part un capteur de mesure du déplacement de ladite enclume. Cette enclume a une extrémité fixée dans le fond de la chambre et l'extrémité opposée qui affleure la paroi interne d'un conduit dans lequel circule la matière dont on doit déterminer les propriétés rhéologiques. L'écoulement de la matière dans le conduit soumet l'enclume à une déformation en cisaillement mesurée par le capteur ce qui permet de déterminer la contrainte de cisaillement de ladite matière.

Cet appareil de mesure tel qu'il est décrit dans le US-A-4 464 928 est difficilement applicable industriellement dans les extrudeuses.

En effet, les fortes pressions rencontrées dans les extrudeuses forcent la matière à pénétrer dans l'espace ménagé entre la paroi interne du fourreau et l'enclume mobile.

La matière ayant ainsi pénétrée dans la chambre, va y stagner pour un temps indéterminé, pendant lequel elle va être soumise à la température généralement élevée maintenue dans le fourreau de l'extrudeuse pour y garder par exemple le polymère à l'état fondu dans le cas de matières plastiques ou pour accomplir des réactions chimiques ou la cuisson dans le cas de produits agro-alimentaires. Ladite matière va donc s'y dégrader thermiquement ce qui se traduit généralement par un durcissement propre à bloquer les mouvements de l'enclume et donc à fausser la mesure.

De plus, on a souvent besoin de travailler dans les extrudeuses des matières thermodurcissables qui vont bloquer l'enclume en quelques minutes.

Par ailleurs, on travaille souvent dans les extrudeuses des matières chargées de grains de poudre agissant comme extenseurs, pigments, renforcateurs, ou bien chargées de fibres destinées à renforcer les propriétés mécaniques de la matière plastique composite ainsi obtenue.

Cette phase étrangère dispersée risque de se coincer dans l'espace et de bloquer le fonctionnement de l'enclume.

Le but de la présente invention est de proposer un perfectionnement à l'appareil de mesure précité qui permet de rendre étanche la chambre de mesure et d'obtenir une mesure immédiate pour l'asservissement de divers paramètres de l'extrudeuse.

L'invention a pour objet un perfectionnement à un appareil de mesure de la contrainte de cisaillement d'une matière traite dans une extrudeuse comprenant au moins une vis entraînée en rotation à l'intérieur d'un fourreau allongé, ledit appareil de mesure comprenant d'une part une l'enclume mobile disposée dans une chambre de mesure ménagée dans le fourreau et d autre part un capteur de mesure du déplacement de ladite enclume, caractérisé en ce que la chambre est rendue étanche par rapport à l'espace formé à l'intérieur du fourreau par un organe d'étanchéité dont au moins une zone est solidaire de l'enclume et possédant un faible module d'élasticité dans le sens de rotation de la vis et un grand module d'élasticité dans l'axe de ladite vis.

Selon une autre caractéristique de l'invention, l'organe d'étanchéité est constitué par une membrane comportant une partie périphérique plane fixée sur la périphérie de la chambre, une partie centrale solidaire de l'enclume et une zone intermédiaire munie de plis longitudinaux parallèles à l'axe de la vis.

L'invention va être décrite plus en détail ci-dessous en se référant aux dessins annexés, donnés uniquement à titre d'exemple et sur lesquels :

- la Fig. 1 est une vue schématique en coupe transversale d'une extrudeuse comportant un appareil de mesure muni du perfectionnement selon l'invention,

- la Fig. 2 est une vue de face de la membrane d'étanchéité de l'appareil de mesure,

- la Fig. 3 est une vue schématique en coupe transversale d'une première variante de l'appareil de mesure,

- la Fig. 4 est une vue schématique en coupe transversale d une seconde variante de l'appareil de mesure.

- la Fig. 5 est une vue schématique en coupe transversale d'une troisième variante de l'appareil de mesure,

- la Fig. 6 est une vue en coupe selon la ligne 6-6 de la Fig. 5,

- la Fig. 7 est une vue schématique en coupe transversale d'une quatrième variante de l'appareil de mesure.

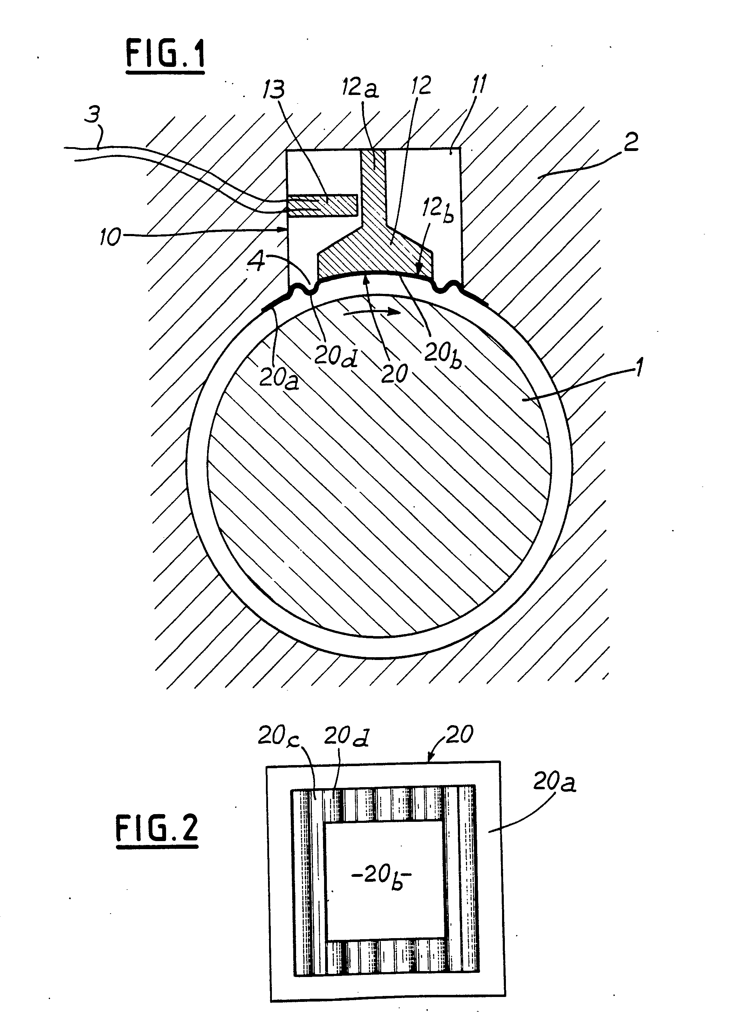

En se rapportant tout d'abord à la Fig. 1, on voit que l'extrudeuse comprend une vis 1 entraînée en rotation autour de son axe à l'intérieur d'une enceinte allongée formant un fourreau 2 qui l'enveloppe.

La vis 1 est munie de filets ou autres organes périphériques et la paroi interne du fourreau 2 forme un lobe.

Pour mesurer la contrainte de cisaillement de la matière traitée par la vis 1, l'extrudeuse comporte un appareil de mesure désigné dans son ensemble par la référence 10.

A cet effet, le fourreau 2 comporte une chambre de mesure 11 dans laquelle est disposée une enclume 12 comprenant une tige 12a dont l'extrémité est fixée dans le fond de la chambre 11 par un dispositif approprié.

La face avant 12b de l'enclume 12 dirigée vers la vis 1 a la forme d'un secteur cylindrique s'inscrivant selon la forme de la paroi interne du fourreau 2.

Dans la chambre 11 est également disposé, en regard de la tige 12a, un capteur 13 de mesure du déplacement de l'enclume 12 comme on le verra ultérieurement.

Le capteur 13 est relié par des fils 3 à un système de traitement des informations, non représenté.

Pour éviter que la matière entraînée par la vis 1 à l'intérieur du fourreau 2 pénètre dans la chambre 11 par l espace libre 4 entre le fourreau 2 et l'enclume mobile 12, cet espace est obturé par un organe d'étanchéité.

Cet organe d'étanchéité doit être le plus souple possible dans la direction tangente à la paroi interne du fourreau 2 et perpendiculaire à l'axe de celui-ci, c'est à dire sensible à la composante circonférentielle de la vitesse de la matière traitée.

De plus, il doit être insensible à la composante axiale de la matière traitée dans l'extrudeuse, afin de donner un signal plus "pur" et facilement interprétable.

Pour cela, l'organe d'étanchéité est constitué par une membrane 20, par exemple métallique, possédant un faible module d'élasticité dans le sens de rotation de la vis 1 et un grand module d'élasticité dans l'axe de ladite vis.

La membrane 20 comporte une partie périphérique plane 20a fixée sur la paroi interne du fourreau 2 à la périphérie de la chambre 11, une partie centrale plane 20b fixée sur la face 12b de l'enclume 12 et une zone intermédiaire 20c munie de plis 20d longitudinaux et parallèles à l'axe de la vis 1.

La membrane 20 a la forme d'un secteur cylindrique s'inscrivant selon la forme de la paroi interne du fourreau 2 et affleurant ladite paroi interne.

D'autre part, la membrane 20 est mince de façon à avoir une grande souples se pour donner au capteur 13 une bonne sensibilité.

Compte tenu des propriétés de la membrane 20 et des fortes pressions de 10 à plus de 300 bars qui peuvent régner à l'intérieur du fourreau 2 de l'extrudeuse, la membrane 20 est soutenue par une contre pression créée dans la chambre 11 par la présence d'un fluide incompressible.

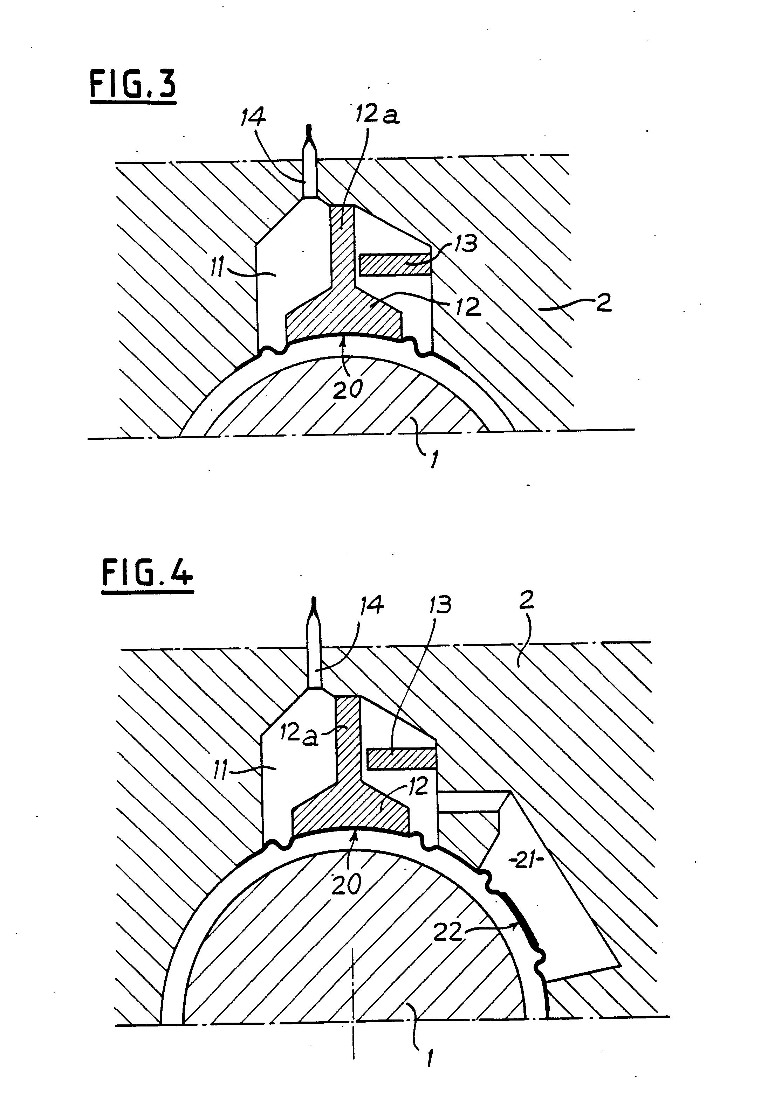

Selon une première configuration, dite passive, et représentée à la Fig. 3, la chambre 11 comporte un tuyau de remplissage 14. Cette chambre est remplie avec un fluide incompressible, puis une purge est effectuée de façon à n'y laisser aucune bulle de gaz et le tuyau 14 est scellé.

Le fluide peut être avantageusement une huile isolante et thermostable du genre liquide de frein ou huile à transformateur si l'on utilise un capteur capacitif pour détecter le mouvement de l'enclume 12. Le fluide peut également être un alliage métallique eutectique choisi pour fondre à une température plus basse que la température de service de l'extrudeuse, si le capteur 13 est d'un type qui n exige pas que le fluide soit un isolant électrique.

Selon une deuxième configuration, dite active-passive et représentée à la Fig. 4, la chambre de mesure 11 est reliée à une chambre de compensation 21 ménagée dans l'épaisseur du fourreau 2. Cette chambre de compensation 21 est isolée de l'espace formé à l'intérieur du fourreau 2 par une membrane passive 22 dont la forme et la souples se permettent des déplacements perpendiculaires à l'axe du fourreau 2, elle peut par exemple être du type anéroïde. Les chambres 11 et 21 sont remplies par un fluide incompressible

La membrane passive 22 permet ainsi d'appliquer une contre-pression hydrostatique derrière la membrane de mesure 20, égale à la pression appliquée par la matière passant devant ladite membrane de mesure.

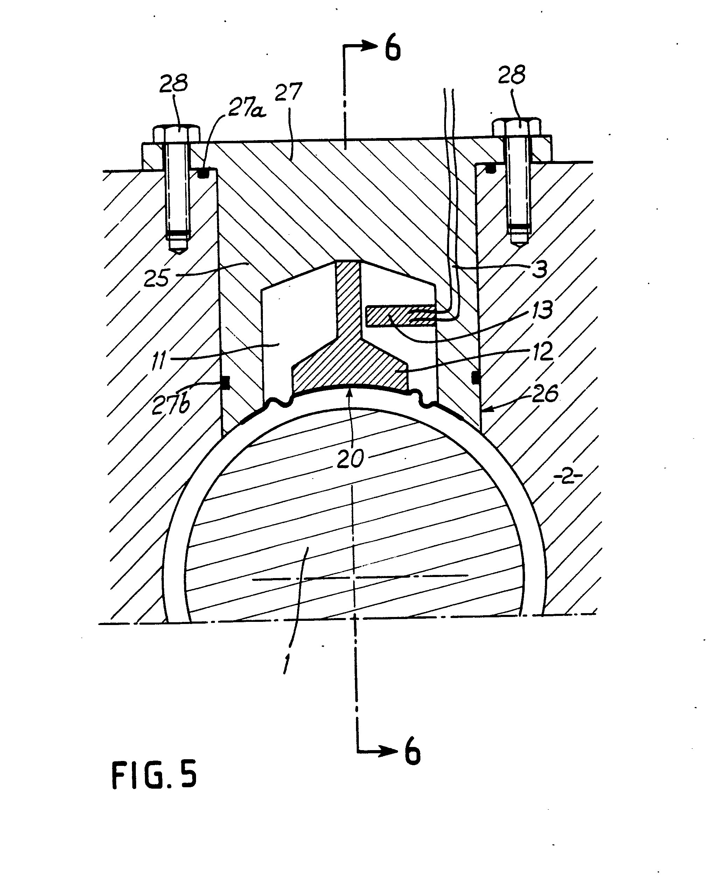

Selon une autre variante représentée à la Fig.5, l'ensemble de l'appareil de mesure, c'est à dire la chambre de mesure 11, l'enclume 12, le capteur 13 et la membrane 20, peut être monté dans un corps amovible 25 s'insérant à friction douce dans une lumière 26 de forme correspondante pratiquée dans le fourreau 2.

Le corps 25 est bloqué dans la lumière 26, par exemple, par une bride 27 fixée sur la paroi externe du fourreau 2 par des vis 28 et un joint 27a assure l'étanchéité entre la bride 27 et le fourreau 2. Ce joint 27a peut être complété par un joint supplémentaire 27b disposé en partie basse du corps 25.

Cette configuration permet l'interchangeabilité rapide des modules de mesure pour les remplacer immédiatement, soit en cas de défauts, soit pour adapter la gamme de mesure de modules spécifiques à la gamme de viscosité de la matière traitée dans l'extrudeuse.

Dans le corps 25 peuvent également être intégrées la chambre de compensation 21 et la membrane passive 22.

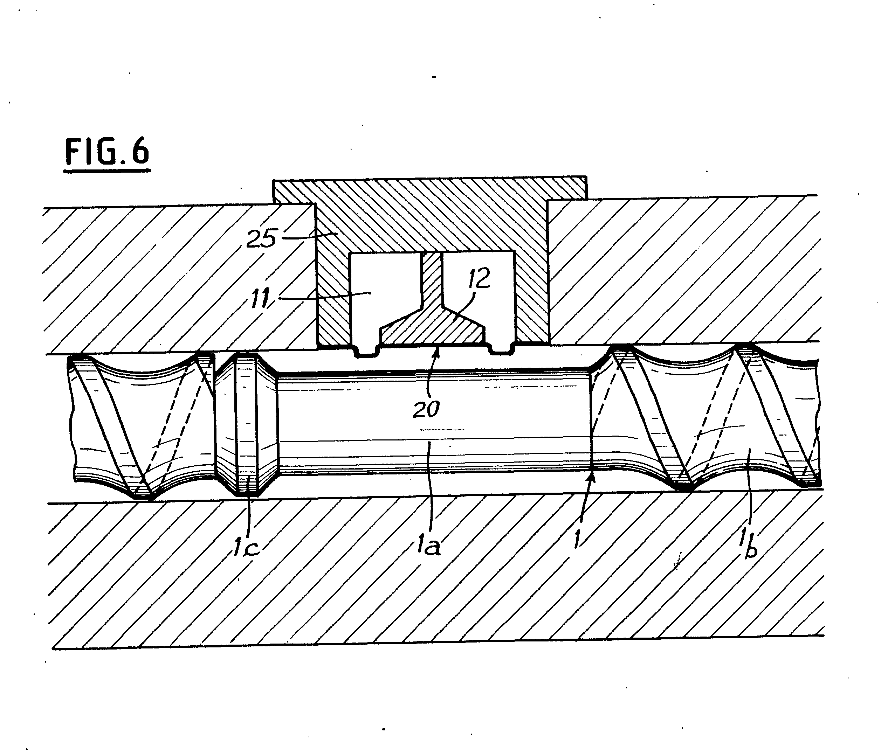

D'une manière générale et pour rendre la mesure obtenue plus directement interprétable et exploitable, l'enclume 12 et la membrane sensible 20 sont de préférence placées en regard d'un tronçon 1a de vis dépourvu de filets et ayant la forme d'un cylindre, comme représenté à la Fig. 6.

Le tronçon cylindrique 1a a une longueur supérieure à la dimension selon l'axe de la vis 1, de la membrane 20 entourant l'enclume de mesure 12, ceci afin que ladite enclume soit placée dans un champ hydrodynamique établi, homogène et connu.

Le tronçon cylindrique 1a est placé, par exemple, entre un filet de pompage 1b situé en amont de la membrane 20 et un organe déprimogène 1c ou un tronçon de vis choisi pour créer une contrepression permettant de maintenir l'entrefer plein de matière traitée au niveau du module de mesure.

D'autre part, le tronçon cylindrique 1a a un diamètre compris entre 80 et 96, de celui de l'alésage du fourreau 2 de telle façon que l'entrefer formé entre la paroi extérieure du tronçon cylindrique 1a et la paroi interne du fourreau 2 possède une valeur suffisamment faible pour conférer à l'appareil de mesure une bonne sensibilité.

Ainsi, la circulation de la matière entraînée par la vis 1 à l'intérieur du fourreau 2 provoque un déplacement plus ou moins important de l'enclume 12 par l'intermédiaire de la membrane 20. Ce déplacement dépend de la viscosité de la matière, et de la composante circonférentielle de sa vitesse il est détecté par le capteur 13 qui émet un signal.

Ce signal est utilisé pour calculer la viscosité de la matière traitée au moyen des paramètres géométriques et opératoires de l'extrudeuse, ainsi que pour alimenter une ou plusieurs boucles de régulation de ladite extrudeuse ou de ses équipements accessoires.

A cet égard, on peut rappeler la formule classique en mécanique des fluides dite formule de

Newton qui définit la viscosité dynamique d'un fluide en fonction du gradient de vitesse $\frac{\partial V}{\partial n}$ perpendiculaire au plan d'écoulement et à la force de cisaillement dF s exerçant sur le plan fluide considéré de surface dS:

$$dF = \eta \, \frac{dV}{dn} \, dS$$

Cette relation est également valable à la paroi qui exerce une force retardatrice sur le fluide, c'est d'ailleurs à cet endroit que les forces sont les plus grandes, car le gradient de vitesse y est le plus élevé.

L'appareil mesure la force de cisaillement dF, tandis que $\frac{\partial V}{\partial n}$ et dS résultent des paramètres de nement de l'extrudeuse et de ses caractéristiques géométriques. De cette relation, on en déduit la viscosité de la matière traitée.

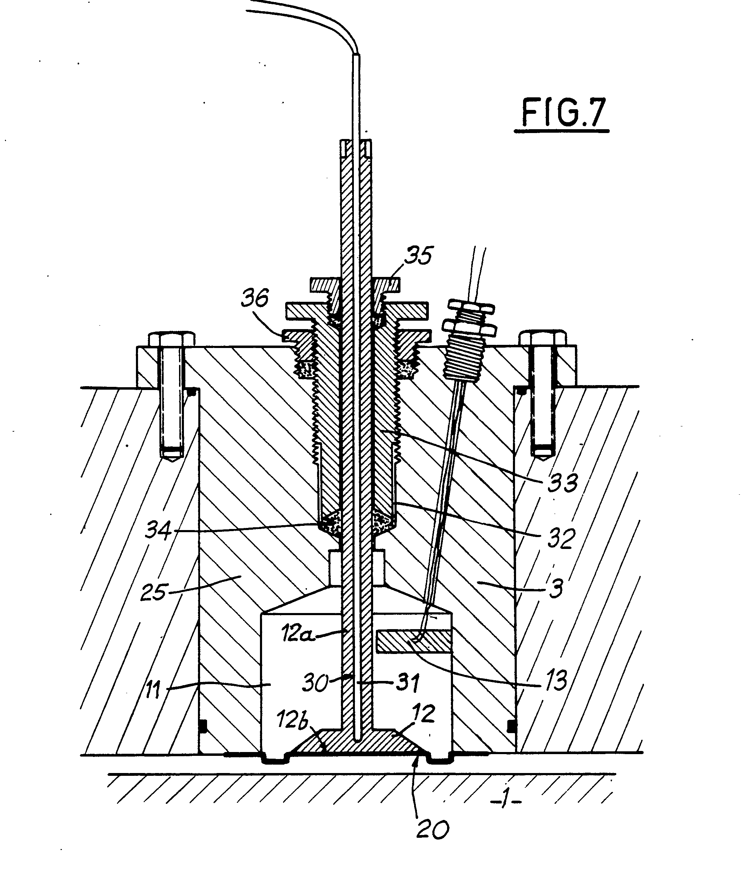

Selon une autre variante représentée à la Fig. 7, l'appareil de mesure de la contrainte de cisaillement comporte également un organe de mesure de la température de la matière traitée à l'intérieur du fourreau 2.

A cet effet, l'enclume 12 et la tige 12a sont percées par un puits thermométrique 30 dans lequel est introduit par exemple un thermocouple 31 dont la soudure chaude est disposée à proximité de la face 12b de l'enclume en regard de la vis 1.

La tige 12a traverse le corps amovible 25 dans un alésage 32 et sa fixation est réalisée par une pièce de blocage mécanique 33 vissée dans ledit alésage 32 et comportant des moyens 34 d'encastrement mécanique de la tige 12a de l'enclume 12.

L'étanchéité entre la pièce de blocage 33 et le corps 25 est assurée par un presse-étoupe 34 et entre la pièce de blocage 33 et la tige 12a de l'enclume 12 par un presse-étoupe 35. Cette configuration permet également de pouvoir régler la position de la face 12b de l'enclume 12 par rapport à la paroi interne du fourreau 2 en agissant sur l'extrémité de la tige 12a débouchant à l'extérieur du fourreau 2.

## Revendications

1. Perfectionnement à un appareil de mesure de la contrainte de cisaillement d'une matière traitée dans une extrudeuse comprenant au moins une vis (1) entrainée en rotation à l'intérieur d'un fourreau allongé (2), ledit appareil de mesure comprenant d'une part une enclume mobile (12, 12a) disposée dans une chambre de mesure (11) ménagée dans le fourreau (2) et d'autre part un capteur de mesure (13) du déplacement de ladite enclume (12, 12a), caractérisé en ce que la chambre (11) est rendue étanche par rapport à l'espace formé à l'intérieur du fourreau (2) par un organe d'étanchéité (20) dont au moins une zone (20b) est solidaire de l'enclume (12, 12a) et possédant un faible module d'élasticité dans le sens de rotation de la vis (1) et un grand module d'élasticité dans l'axe de ladite vis.

2. Pefectionnement selon la revendication 1 caractérisé en ce que l'organe d'étanchéité est constitué par une membrane (20) comportant une partie périphérique plane (20a) fixée sur la périphérie de la chambre (11), une partie centrale (20b) solidaire de l'enclume (12) et une zone intermédiaire (20c) munie de plis (20b) longitudinaux par rapport à l'axe de la vis (1).

3. Perfectionnement selon la revendication 2, caractérisé en ce que la membrane (20) affleure la paroi interne du fourreau (2) et s'inscrit selon la forme de ladite paroi interne du fourreau.

4. Perfectionnement selon l'une des revendications 1 à 3, caractérisé en ce que la membrane (20) est métallique.

5. Perfectionnement selon la revendication 1, caractérisé en ce que la chambre (11) est remplie d un fluide incompressible.

6. Perfectionnement selon la revendication 1, caractérisé en ce que la chambre (11) est reliée à une chambre de compensation (21) ménagée dans le fourreau (2) et isolée de l'espace formé à l'intérieur dudit fourreau par une membrane passive (22), lesdites chambres (11 et 21) étant remplies d'un fluide incompressible.

7. Perfectionnement selon la revendication 1 , caractérisé en ce que l'enclume (12) comporte un puits thermométrique (30) à l'intérieur duquel est placée une sonde thermométrique (31) de mesure de la température de la matière traitée dans l'extrudeuse.

8. Perfectionnement selon l'une des revendications précédentes, caractérisé en ce que la chambre de mesure (11) contenant l' enclume (12) et le capteur (13) est placée en face d'un tronçon cylindrique (20a) de la vis (1) dont la longueur est supérieure à celle de la membrane (20) et dont le diamètre est compris entre 80 et 96% du diamètre interne du fourreau (2) ledit tronçon cylindrique étant situé entre un filet de pompage (1b) et un organe (1c) ou un tronçon de vis créant une contre-pression en aval de ladite membrane 20.

9. Perfectionnement selon l'un des revendications précédentes, caractérisé en ce que la chambre de mesure (11) contenant l'enclume (12) et le capteur (13) sont placés dans un corps amovible (25) y s'insérant dans une lumière (26) de forme correspondante pratiquée dans le fourreau (2)

10. Perfectionnement selon la revendication 1, caractérisé en ce que le capteur (13) émet un signal utilisé pour calculer la viscosité de la matière traitée dans l'extrudeuse au moyen des paramètres géométriques et opératoires de ladite extrudeuse, et pour alimenter une ou plusieurs boucles de régulation de l'extrudeuse ou de ses équipements accessoires.

## FIG.1

## FIG.2

## FIG.3

## FIG.4

FIG.5

EP 0 399 859 A1

## FIG.6

F 78 . 89

89/78

## FIG.7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A,D | US-A-4 464 928  (J.M. DEALY) * Revendications; colonne 3, lignes 7-11; figures * | 1-3,10 | B 30 B  11/24<br>B 29 C  47/92<br>. G 01 N  11/00 |
| A | DE-A-1 798 201  (G. SCHENKEL) * Revendication 1; page 9, lignes 10-16; figures 1-4 * | 1,8,10 | |
| A | PATENT ABSTRACTS OF JAPAN, vol. 13, no. 69 (C-569)[3417], 16 février 1989, page 15 C 569; & JP-A-63 258 627 (NOK CORP.) 26-10-1988 | 1,10 | |
| A | FR-A-2 621 525  (REGIE NATIONALE DES USINS RENAULT) * Revendications 1,4,5; figure 2 * | 1,10 | |

| | | | DOMAINES TECHNIQUES RECHERCHES (Int. Cl.5) |
|---|---|---|---|
| | | | B 30 B<br>B 29 C<br>G 01 N |

Le présent rapport a été établi pour toutes les revendications

| Lieu de la recherche | Date d'achèvement de la recherche | Examinateur |
|---|---|---|
| LA HAYE | 12-07-1990 | BELIBEL C. |